# EUROPÄISCHE PATENTSCHRIFT

(11) **EP 4 171 781 B1**
(45) Veröffentlichungstag und Bekanntmachung des Hinweises auf die Patenterteilung: **24.07.2024**
(21) Anmeldenummer: 20839001.3
(22) Anmeldetag: 21.12.2020
(51) Int. Cl.: B01D 29/21, B01D 29/58, B01D 29/96, B01D 35/18, B01D 36/00, B01D 29/92

(54) **FILTEREINRICHTUNG MIT EINEM FILTERELEMENT**
FILTER DEVICE HAVING A FILTER ELEMENT
DISPOSITIF DE FILTRATION COMPORTANT UN ÉLÉMENT FILTRANT

(30) Priorität: 26.06.2020 EP 20182427
(43) Veröffentlichungstag der Anmeldung: 03.05.2023
(73) Patentinhaber: MANN+HUMMEL GmbH, 71636 Ludwigsburg (DE)
(72) Erfinder: OPRISCH, Christine, 71739 Oberriexingen (DE); FÜLLEMANN, Jochen, 71638 Ludwigsburg (DE); PFLÜGER, Frank, 74343 Sachsenheim (DE)
(74) Vertreter: Mann + Hummel Intellectual Property
(86) Internationale Anmeldenummer: PCT/EP2020/087399
(87) Internationale Veröffentlichungsnummer: WO 2021/259515

(56) Entgegenhaltungen:
- WO-A1-02/100511
- WO-A1-2019/112561
- DE-A1- 102017 011 232

## Beschreibung

### Technisches Gebiet

Die Erfindung bezieht sich auf eine Filtereinrichtung mit einem Filterelement zur Filtration eines flüssigen oder gasförmigen Fluids.

### Stand der Technik

Aus der WO 2019/112561 A1 ist ein Kraftstofffilter mit einem ringförmigen Filterelement bekannt, das in einem Filtergehäuse mit einem topfförmigen Filtergrundgehäuse und einem Deckel aufgenommen ist. Das Filterelement ist mit einem hohlzylindrischen Filtermediumkörper versehen, dessen axiale Stirnseiten von Endscheiben abgedeckt sind. Der Filtermediumkörper umschließt einen innenliegenden Strömungsraum, der an die Reinseite des Filtermediumkörpers angrenzt und über den das gereinigte Fluid axial ableitbar ist. Der Deckel des Filtergehäuses ist über ein Gewinde mit dem topfförmigen Filtergrundgehäuse verschraubbar, außerdem ist der Deckel in Drehrichtung über Formschlusselemente mit der Endscheibe gekoppelt, so dass bei einer Drehbewegung des Deckels auch das Filterelement in Drehung versetzt wird.

### Offenbarung der Erfindung

Der Erfindung liegt die Aufgabe zu Grunde, mit einfachen konstruktiven Maßnahmen eine Filtereinrichtung mit einem als Hohlkörper ausgebildeten Filterelement in der Weise auszuführen, dass eine Beschädigung des Filterelements beim Einsetzen und Entnehmen in beziehungsweise aus dem Filtergehäuse vermieden wird.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung kann zur Filtration eines flüssigen oder eines gasförmigen Fluids eingesetzt werden, beispielsweise als Kraftstofffilter, als Ölfilter oder als Luftfilter. Die Filtereinrichtung weist ein Filtergehäuse mit einem topfförmigen Filtergrundgehäuse und einem aufsetzbaren und abnehmbaren Deckel auf sowie ein in das Filtergehäuse einsetzbares Filterelement, an dem die Filtration des Fluids stattfindet. Das Filterelement weist einen als Hohlkörper ausgeführten Filtermediumkörper auf, der hohlzylindrisch ausgeführt ist und einen innenliegenden Strömungsraum umschließt.

Der Filtermediumkörper wird, bezogen auf die Längsachse des Filterelements sowie des Filtergehäuses, in Radialrichtung durchströmt, üblicherweise radial von außen nach innen, so dass der innenliegende Strömungsraum das gereinigte Fluid aufnimmt, das aus dem Strömungsraum in axialer Richtung abgeleitet wird. Prinzipiell ist aber auch eine Durchströmung des Filtermediumkörpers in Gegenrichtung möglich.

Die verwendeten Begriffe "axial" und "radial" beziehen sich auf die Längsachse von Filtergehäuse und montiertem, in das Filtergehäuse eingesetztem Filterelement.

Mindestens an einer Stirnseite des Filtermediumkörpers, vorzugsweise an beiden axial gegenüberliegenden Stirnseiten liegt jeweils eine Endscheibe, die die jeweilige Stirnseite des Filtermediumkörpers strömungsdicht abschließt. Die Filtereinrichtung weist ein Montagebauteil zur Montage und Demontage des Filterelements im Filtergrundgehäuse auf bzw. wirkt mit dem Montagebauteil zusammen. Bei dem Montagebauteil handelt es sich vorzugsweise um den Deckel des Filtergehäuses. Gegebenenfalls kann es sich aber auch um ein zusätzliches, unabhängig vom Deckel ausgebildetes Bauteil handeln; in diesem Fall handelt es sich um eine Kombination von Filtereinrichtung und Montagebauteil.

Das Montagebauteil ist mit der Endscheibe verbindbar und zusätzlich, über eine Drehbewegung um die Längsachse, mit dem Filtergrundgehäuse verbindbar. Dementsprechend schafft das Montagebauteil eine Verbindung zwischen dem Filterelement und dem Filtergrundgehäuse. Die Verbindung des Montagebauteils mit der Endscheibe erfolgt axial - in Richtung der Längsachse - form- oder kraftschlüssig. In Drehrichtung erfolgt dagegen die Verbindung des Montagebauteils mit der Endscheibe in der Weise, dass die Verbindung frei rotierbar ausgeführt ist.

Diese Ausführung hat den Vorteil, dass sowohl bei der Montage als auch der Demontage, bei der jeweils eine Drehbewegung des Montagebauteils zum Verbinden beziehungsweise Lösen des Filterelements mit dem Filtergrundgehäuse durchgeführt wird, das Filterelement aufgrund der freien Rotierbarkeit keine Drehbewegung im Filtergrundgehäuse ausführt. Bei der Montage und bei der Demontage führt das Filterelement bezogen auf das Filtergrundgehäuse lediglich eine axiale Einsetzbewegung beziehungsweise Entnahmebewegung aus. Dementsprechend treten zwischen der äußeren Mantelfläche des Filterelements und der Innenwand des aufnehmenden Filtergrundgehäuses in Dreh- beziehungsweise Umfangsrichtung keine oder nur sehr geringe Kräfte auf. Das Filterelement und insbesondere der Filtermediumkörper am Filterelement sind entsprechend von derartigen Kräften entlastet.

Bei der Drehbewegung des Montagebauteils führt dieses zugleich eine axiale Bewegung gegenüber dem Filtergrundgehäuse aus. Da das Montagebauteil axial fest mit der Endscheibe und somit axial fest mit dem Filterelement verbunden ist, übt auch das Filterelement eine entsprechende Axialbewegung aus. Dies gilt sowohl für die Montage als auch für die Demontage des Filterelements. Während der axialen Bewegung des Filterelements behält dieses seine relativ Drehlage gegenüber dem Filtergrundgehäuse bei. Aufgrund der freien Rotierbarkeit zwischen Filterelement und Montagebauteil übt nur das Montagebauteil während der Montage und der Demontage eine Rotationsbewegung aus, nicht jedoch das Filterelement.

Am Montagebauteil ist mindestens ein Formschlusselement angeordnet, das mit einem Gegenformschlusselement an der Endscheibe in eine axiale Formschlussverbindung verbringbar ist. Das Gegenformschlusselement befindet sich entweder unmittelbar an der Endscheibe oder an einem Bauteil, das fest mit der Endscheibe verbunden oder einteilig mit der Endscheibe ausgebildet ist. Die Verbindung von Formschlusselement und Gegenformschlusselement ermöglicht in Achsrichtung die gewünschte formschlüssige Verbindung von Montagebauteil und Filterelement bei zugleich freier Rotierbarkeit des Montagebauteils gegenüber dem nicht rotierenden Filterelement.

Das Gegenformschlusselement ist als ein umlaufender Formschlusskragen ausgebildet, in den mindestens eine kulissenförmige Einführschräge zum Einführen des Formschlusselements am Montagebauteil eingebracht ist. Vorteilhafterweise sind in den Formschlusskragen an der radial außen liegenden Umfangsseite zwei diametral gegenüberliegende Einführschrägen eingebracht, über die jeweils ein Formschlusselement am Montagebauteil in Achsrichtung in die Formschlussposition gebracht werden kann. In der axial gekoppelten Position befindet sich das Formschlusselement am Montagebauteil unterhalb des Formschlusskragens und kann in Umfangsrichtung am Formschlusskragen entlangwandern. Dies ermöglicht das gewünschte freie Rotieren des Montagebauteils gegenüber dem Filterelement, bei zugleich axialer Kopplung von Montagebauteil und Filterelement.

Der Formschlusskragen ist von der mindestens einen Einführschräge durchbrochen. Beim Entlangwandern des Formschlusselements in Umfangsrichtung unterhalb des Formschlusskragens fährt das Formschlusselement axial ein Stück weit in die Einführschräge hinein, ohne jedoch durch die Einführschräge hindurch bis zur entkoppelten Position zu gelangen. Das Formschlusselement fährt bei weiterer Relativdrehung zwischen Montagebauteil und Filterelement wieder aus der Einführschräge heraus und läuft unter dem Formschlusskragen weiter.

Gemäß vorteilhafter Ausführung ist der Übergang eines Wandabschnitts, der die mindestens eine Einführschräge begrenzt, zur Unterseite des Formschlusskragens abgerundet ausgebildet. An der Abrundung kann das in die Einführschräge hineinragende Formschlusselement bei weiterer Relativdrehung mit minimalem Kraftaufwand wieder in die axiale Position unterhalb des Formschlusskragens gelangen.

Mindestens eine Einführschräge, vorzugsweise sämtliche Einführschrägen sind in bevorzugter Ausführung entlang einer Geraden ausgerichtet, die mit der Drehbewegung des Montagebauteils einen spitzen Winkel einnimmt. Der Winkel liegt vorzugsweise in einem Winkelbereich von 30° bis 60°, insbesondere bei 45°.

Gemäß noch einer weiteren vorteilhaften Ausführung ist an der Endscheibe ein axial überstehender Dom angeformt, an dem das Gegenformschlusselement als am Dom radial überstehender Formschlusskragen ausgebildet ist. In bevorzugter Ausführung bildet der Dom ein Strömungsbauteil, das mit dem innen liegenden Strömungsraum im Filtermediumkörper strömungsverbunden ist. Über den Dom kann somit in Achsrichtung Fluid strömen, insbesondere gereinigtes Fluid aus dem innenliegenden Strömungsraum axial abgeleitet werden.

Die Einführschräge ist vorteilhafterweise so ausgerichtet, dass das Montagebauteil zum Einführen des Formschlusselements in die Einführschräge eine Lösebewegung ausführen muss, woraufhin das Formschlusselement entlang der Einführschräge nach unten wandert und die axiale Formschlussposition unterhalb des Formschlusskragens einnimmt. Anschließend kann das Montagebauteil über die Schraubbewegung mit dem Filtergrundgehäuse verschraubt werden. Mit dem Erreichen der axialen Formschlussposition verbleibt das Formschlusselement unterhalb des Formschlusskragens und stützt sich axial am Formschlusskragen ab, ohne bei einer Relativdrehung zwischen Montagebauteil und Filterelement durch die schräg verlaufende Einführschräge zurückzuwandern. Erst bei einer Umkehrung der Relativdrehrichtung kann das Formschlusselement über die Einführschräge zurückwandern, wodurch die axiale Kopplung von Montagebauteil und Filterelement aufgehoben wird.

Damit eine ausreichend große Kontaktfläche zur sicheren Führung des Formschlusselements in der Einführschräge zur Verfügung steht, kann es vorteilhaft sein, dass die axiale Erstreckung des radial überstehenden Formschlusskragens ein Mindestmaß aufweist, das beispielsweise mindestens doppelt so groß ist wie der radiale Überstand des Formschlusskragens gegenüber der Mantelfläche des Doms.

Desweiteren kann es vorteilhaft sein, dass die oben liegende Stirnseite des Doms eine mittige Vertiefung aufweist und in Richtung der Einführschräge geneigt ist, um das Einführen des Formschlusselements in die Einführschräge zu erleichtern und zu unterstützen.

Gemäß noch einer vorteilhaften Ausführung weist das Montagebauteil einen axial verlaufenden Strömungsstutzen auf, der auf den Dom aufsetzbar ist. An der Wand des Strömungsstutzens ist das mindestens eine Formschlusselement angeordnet. Im montierten Zustand bilden der Strömungsstutzen am Montagebauteil und der Dom einen gemeinsamen, axial durchgehenden Strömungsweg für das Fluid.

Gemäß einer vorteilhaften Ausführung sind das Montagebauteil und das Filtergrundgehäuse mit ineinander verschraubbaren Gewinden versehen. Über die Gewindesteigung üben das Montagebauteil und damit auch das Filterelement bei der Drehbewegung während des Einschraubens beziehungsweise Herausschraubens zugleich eine Axialbewegung aus.

In einer alternativen Ausführung sind das Montagebauteil und das Filtergrundgehäuse über eine schräg verlaufende, spiralförmige Nut und ein in die Nut eingreifendes Formschlusselement verknüpft, wobei auch in diesem Fall eine Drehbewegung des Montagebauteils zugleich zu einer axialen Bewegung von Montagebauteil und Filterelement führt.

Die Gewinde - oder gemäß der alternativen vorteilhaften Ausführung die spiralförmige Nut und das eingreifende Formschlusselement - befinden sich vorteilhafterweise an der Innenwand des Filtergrundgehäuses, insbesondere benachbart zur offenen Seite des Filtergrundgehäuses, und an der Außenseite des Montagebauteils.

Gemäß einer weiteren vorteilhaften Ausführung ist an der Innenwand des Filtergrundgehäuses eine axiale Führungsrippe angeordnet. In den Außenrand einer unteren, dem Boden des Filtergrundgehäuses benachbarten Endscheibe ist eine mit der axialen Führungsrippe korrespondierende Abflachung eingebracht. Die Führungsrippe am Filtergrundgehäuse und die Abflachung an der unteren Endscheibe ermöglichen und gewährleisten in Umfangsrichtung eine eindeutige Positionierung des Filterelements im Filtergrundgehäuse und bilden zudem eine Verdrehsicherung für das in das Filtergrundgehäuse eingesetzte Filterelement. Es kann zweckmäßig sein, die axiale Länge der Führungsrippe so auszubilden, dass im eingesetzten Zustand die Abflachung an der Endscheibe an der Führungsrippe auf Kontakt liegt.

Die Erfindung bezieht sich außerdem auf die Verwendung eines Filterelements in einer vorbeschriebenen Filtereinrichtung, wobei das Filterelement einen Filtermediumkörper mit einem innenliegenden Strömungsraum und mindestens eine Endscheibe aufweist, die bezogen auf eine Längsachse des Filtermediumkörpers an einer Stirnseite desselben angeordnet ist. Das Filterelement umfasst außerdem ein Gegenformschlusselement, das an der Endscheibe oder an einem Bauteil an der Endscheibe angeordnet ist. Das Gegenformschlusselement ist als ein umlaufender Formschlusskragen ausgebildet, in den mindestens eine kulissenförmige Einführschräge zum Einführen eines Formschlusselements an einem Montagebauteil eingebracht ist.

Die Erfindung bezieht sich auch auf ein Filterelement für eine Filtereinrichtung, insbesondere nach einem der Ansprüche 1 bis 10. H

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht einer Filtereinrichtung, mit einem Filtergrundgehäuse, in dem ein Filterelement aufgenommen ist, und mit einem auf das Filtergrundgehäuse aufsetzbaren Deckel, der zugleich ein Montagebauteil bildet;
- Fig. 2: eine perspektivische Ansicht von unten auf den Deckel;
- Fig. 3: eine perspektivische Ansicht von oben auf das Filterelement;

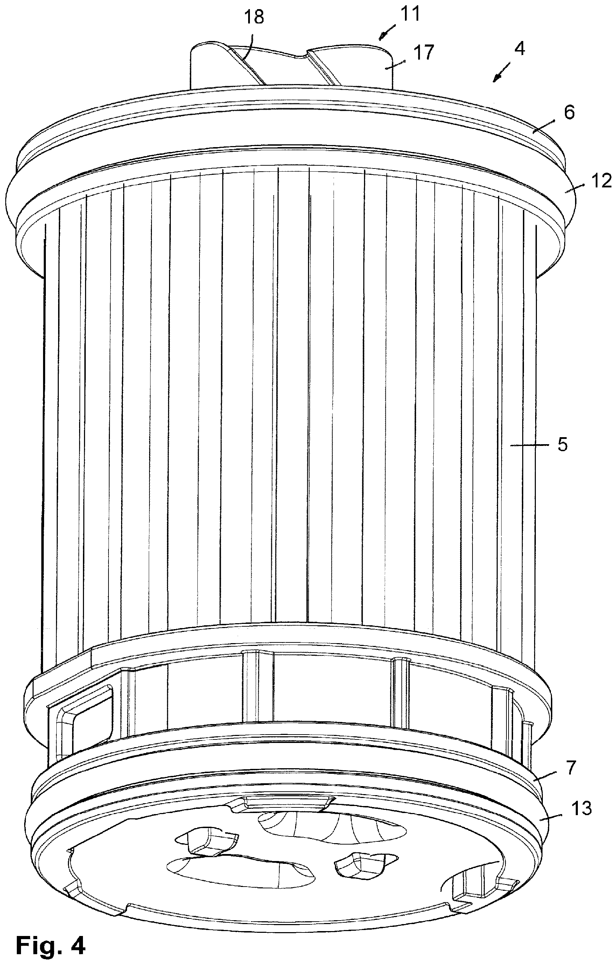

- Fig. 4: eine perspektivische Ansicht von unten auf das Filterelement;

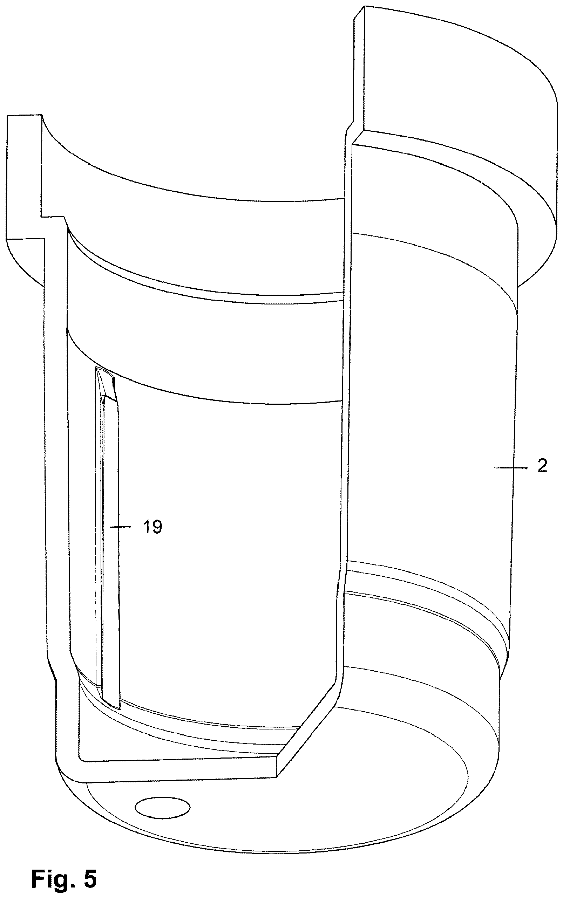

- Fig. 5: das Filtergrundgehäuse, teilweise aufgeschnitten;
- Fig. 6: die Filtereinrichtung mit dem Filterelement im Filtergrundgehäuse und aufgesetztem Deckel, teilweise aufgeschnitten;
- Fig. 7: einen Schnitt gemäß Schnittlinie VII-VII aus Fig. 6; und
- Fig. 8: ein Schaubild mit dem axialen Verlauf des Deckels und des Filterelements während der Demontage, dargestellt über eine vollständige Deckelumdrehung.

In den Figuren sind gleiche Bauteile mit gleichen Bezugszeichen versehen.

### Ausführungsform(en) der Erfindung

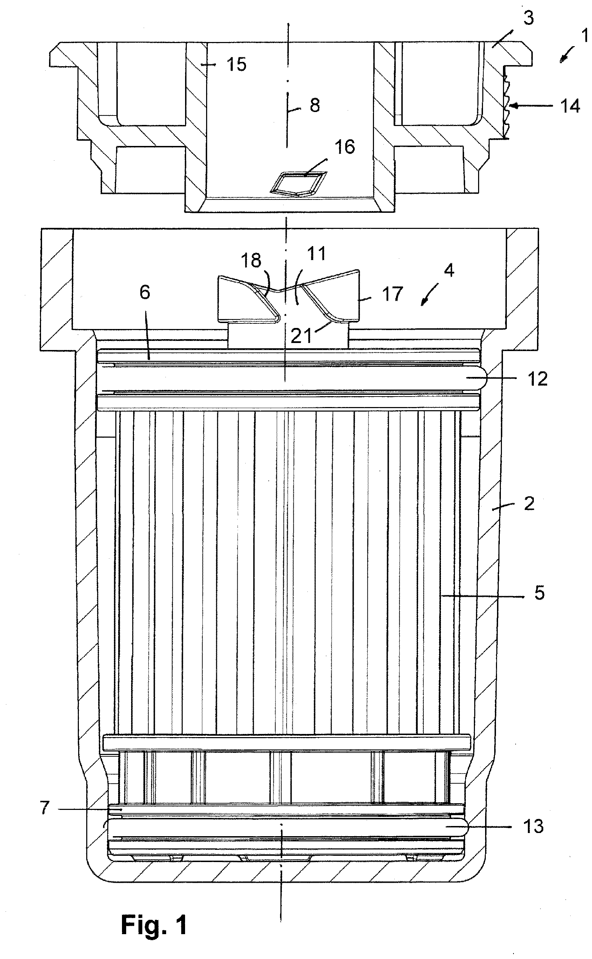

Im Folgenden wird auf die in den Fig. 1, 6 und 7 dargestellte Filtereinrichtung 1 in Verbindung mit den weiteren Figuren Bezug genommen.

Die Filtereinrichtung 1 wird zur Filtration eines flüssigen oder gasförmigen Fluids eingesetzt und umfasst ein Filtergehäuse mit einem topförmigen Filtergrundgehäuse 2 und einem auf die offene Seite des Filtergrundgehäuses 2 aufsetzbaren Deckel 3 sowie ein Filterelement 4, das in das Filtergrundgehäuse 2 eingesetzt ist. Das Filterelement 4 ist als hohlzylindrisches Rundfilterelement ausgebildet und umfasst einen Filtermediumkörper 5 sowie stirnseitige Endscheiben 6 und 7, die an den axialen Stirnseiten des Filtermediumkörpers 5 angeordnet sind und diese abdecken.

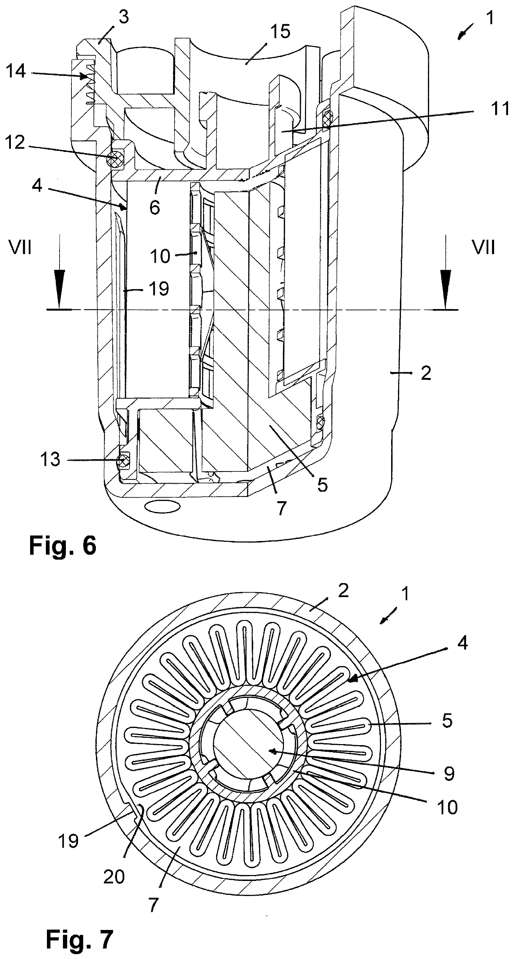

Der Filtermediumkörper 5 wird, bezogen auf die Längsachse 8 der Filtereinrichtung 1 und des Filterelements 4, radial von außen nach innen durchströmt. Der Filtermediumkörper 5 besteht aus einem gefalteten Filtermaterial (Fig. 7). Der Filtermediumkörper 5 umschließt einen innenliegenden Strömungsraum 9, der von einem Stützgitter 10 des Filterelements 4 umschlossen ist, auf dessen Außenseite sich der Filtermediumkörper 5 befindet. Aus dem innenliegenden Strömungsraum 9 wird das gereinigte Fluid axial nach oben abgeleitet. Hierfür ist an der oberen Endscheibe 6 ein axial überstehender Dom 11 angeformt, der ein mit dem Strömungsraum 9 verbundenes Strömungsbauteil bildet.

Sowohl die obere Endscheibe 6 als auch die Endscheibe 7 sind jeweils mit einer umlaufenden Ringnut versehen, in der jeweils ein Dichtring 12,13 aufgenommen ist. Im montierten Zustand gemäß Fig. 6 liegen die Dichtringe 12,13 an der Innenwand des aufnehmenden Filtergrundgehäuses 2 dichtend an.

Der Deckel 3 des Filtergehäuses hat zum einen die Funktion, im montierten Zustand die offene Stirnseite des Filtergrundgehäuses 2 zu verschließen. Zum anderen kommt dem Deckel 3 auch eine Montage- und Demontagefunktion für das Filterelement 4 zu. Bei der Montage wird das Filterelement 4 in das Filtergrundgehäuse 2 eingesetzt und fixiert, bei der Demontage wird die Fixierung gelöst und das Filterelement 4 aus dem Filtergrundgehäuse 2 entnommen. Entsprechend bildet der Deckel 3 auch ein Montagebauteil für das Filterelement 4.

Der Deckel 3 ist an seinem Außenumfang mit einem Gewinde 14 versehen, das in ein korrespondierendes Innengewinde an der Innenwand des Filtergrundgehäuses 2 benachbart zur Öffnung des Filtergrundgehäuses 2 einschraubbar ist. Der Deckel 3 weist außerdem einen Strömungsstutzen 15 auf, der mittig in dem Deckel 3 angeordnet und auf den Dom 11 aufsetzbar ist. Im montierten Zustand liegt der Strömungsstutzen 15 koaxial zum Dom 11, so dass der Strömungsstutzen 15 und der Dom 11 einen gemeinsamen Strömungsweg zur Ableitung des gereinigten Fluids aus dem innen liegenden Strömungsraum 9 bilden.

Der Dom 11 und der Strömungsstutzen 15 ermöglichen eine in Achsrichtung formschlüssige Verbindung zwischen der Endscheibe 6 und damit auch dem Filterelement 4 und dem Deckel 3. Die in Achsrichtung formschlüssige Verbindung erlaubt zugleich eine freie Drehbarkeit des Deckels 3 gegenüber dem Filterelement 4. Dies führt dazu, dass beim Eindrehen und Ausdrehen des Deckels 3 in beziehungsweise aus dem Filtergrundgehäuse 2 das Filterelement 4 lediglich axial abgesenkt beziehungsweise angehoben wird, jedoch keine Drehbewegung ausführt. Daher wirken auf die außenliegende Mantelfläche des Filtermediumkörpers 5 keine Kräfte in Umfangsrichtung.

Die formschlüssige Verbindung wird mithilfe von Formschlusselementen hergestellt. An der Innenwand des Strömungsstutzens 15 befinden es sich diametral gegenüberliegend zwei radial nach innen hineinragende Formschlusselemente 16, denen ein Gegenformschlusselement in Form eines Formschlusskragens 17 an der Stirnseite des Doms 11 zugeordnet ist. Die Formschlusselemente 16 am Strömungsstutzen 15 des Deckels 3 und der Formschlusskragen 17 können in eine axiale Formschlussverbindung verbracht werden, die auch wieder gelöst werden kann. Zugleich bleibt die freie Rotierbarkeit zwischen Deckel 3 und Endscheibe 6 erhalten, so dass das Filterelement 4 im Filtergrundgehäuse 2 beim Ein- und Ausschrauben des Deckels 3 keine Drehbewegung um die Längsachse 8 ausführt. Dementsprechend wirken auf den Filtermediumkörper 5 auch keine Kräfte in Umfangsrichtung.

Der Formschlusskragen 17 ragt radial über die Mantelfläche des Doms 11 hinaus. Sobald die Formschlusselemente 16 in eine Position axial unterhalb des Formschlusskragens 17 gebracht sind, werden die Formschlusselemente 16 in Achsrichtung von dem Formschlusskragen 17 gehalten.

In den Formschlusskragen 17 sind zwei diametral gegenüberliegende Einführschrägen eingebracht. Die Einführschrägen 18 erstrecken sich näherungsweise entlang einer Geraden, die mit der Drehbewegung des Deckels 3 - näherungsweise in einer senkrecht zur Längsachse 8 verlaufenden Ebene - während des Lösens oder Einschraubens des Deckels einen spitzen Winkel einnimmt. Der Winkel liegt im Ausführungsbeispiel bei näherungsweise 45°. Die Einführschräge 18 ist so ausgerichtet, dass der Deckel 3 zum Einführen der Formschlusselemente 16 in die Einführschrägen 18 eine Lösebewegung ausführen muss, woraufhin die Formschlusselemente 16 entlang der Einführschrägen 18 nach unten bis zum Erreichen der Formschlussposition unterhalb des Formschlusskragens 17 wandern. Im Anschluss hieran kann der Deckel 3 in das Filtergrundgehäuse 2 eingeschraubt werden.

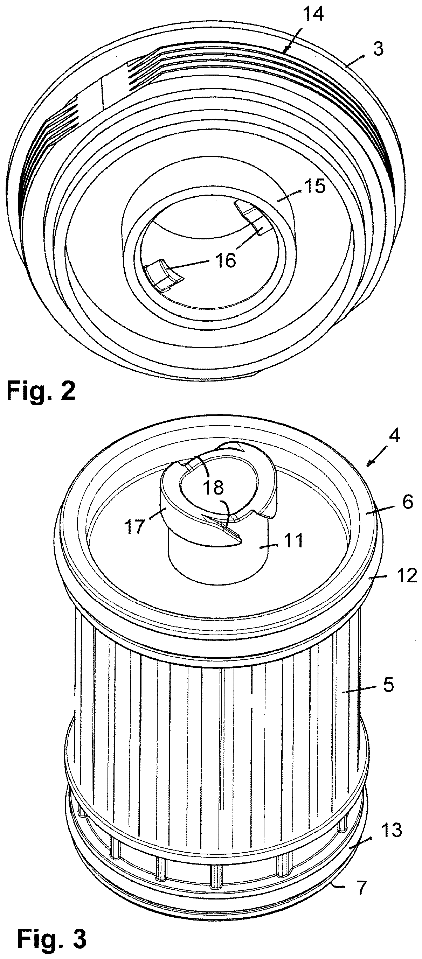

Wie insbesondere Fig. 1 und Fig. 3 zu entnehmen ist, weist die Stirnseite des Doms 11 eine mittige Vertiefung auf, deren tiefster Punkt am Eingang der Einführschrägen 18 liegt. Hierdurch wird das Einführen der Formschlusselemente 16 unterstützt.

Wie den Fig. 6 und 7 zu entnehmen ist, befindet sich an der Innenwand des Filtergrundgehäuses 2 eine axiale Führungsrippe 19. In den Außenrand der unteren Endscheibe 7 ist eine mit der axialen Führungsrippe 19 korrespondierende Abflachung 20 eingebracht. Die Führungsrippe 19 am Filtergrundgehäuse 2 und die Abflachung an der unteren Endscheibe 7 ermöglichen und gewährleisten in Umfangsrichtung eine eindeutige Positionierung des Filterelements 4 im Filtergrundgehäuse 2 und bilden zudem eine Verdrehsicherung für das in das Filtergrundgehäuse 2 eingesetzte Filterelement 4. Es kann zweckmäßig sein, die axiale Länge der Führungsrippe 19 so auszubilden, dass im eingesetzten Zustand des Filterelements 4 in das Filtergrundgehäuse 2 die Abflachung 20 an der Endscheibe 7 an der Führungsrippe 19 anliegt.

Die obere Endscheibe 6 weist keine derartige Abflachung auf. Die axiale Länge der Führungsrippe 19 ist so bemessen, dass im eingesetzten Zustand die obere Endscheibe 6 axial auf Abstand zur Führungsrippe 19 liegt. Alternativ ist es möglich, eine entsprechende Abflachung auch in die obere Endscheibe 6 einzubringen und die Führungsrippe 19 so auszuführen, dass im eingesetzten Zustand die Abflachungen an beiden Endscheiben an der Führungsrippe 19 anliegen.

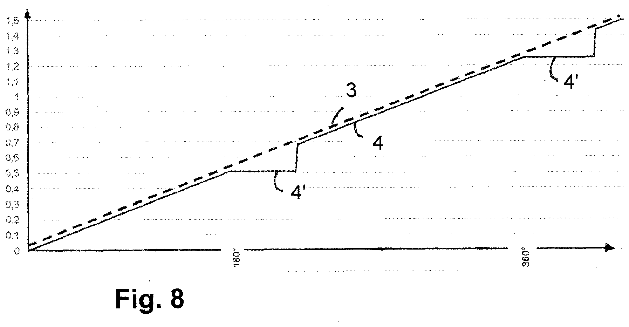

In Fig. 8 ist ein Schaubild mit dem axialen Verlauf des Deckels 3 und des Filterelements 4 während des Herausdrehens bei der Demontage des Filterelements 3 vom Filtergrundgehäuse 2 über eine vollständige Deckelumdrehung von 360° dargestellt. Die x-Achse gibt die Umdrehung des Deckels 3 um die Längsachse in Grad an, die y-Achse die axial zunehmende Entfernung von Deckel 3 und Filterelement 4 vom Filtergrundgehäuse 2 entsprechend der Gewindesteigung des Gewindes 14 am Deckel 3. Der gestrichelte Verlauf bezeichnet die axiale Entfernung des Deckels 3, der durchgehende Verlauf die axiale Entfernung des Filterelements 4.

Während der axiale Verlauf des Deckels 3 der Gewindesteigung folgend durchgehend und kontinuierlich ausgebildet ist, befinden sich in dem axialen Verlauf des Filterelements 4 zwei Stufen 4', die sich in Höhe der diametral gegenüberliegenden Einführschrägen 18 befinden. Beim Entlangwandern des Formschlusselements 16 in Umfangsrichtung unterhalb des Formschlusskragens 17 gelangt das Formschlusselement 16 axial ein Stück weit in die Einführschräge 18, wodurch das axiale Herausdrehen durch den Deckel 3 kompensiert wird. Das Formschlusselement 16 fährt bei weiterer Drehung des Deckels 3 wieder aus der Einführschräge 18 heraus und läuft unter dem Formschlusskragen 17 weiter; in dieser Phase führen der Deckel 3 und das Filterelement 4 die gleiche axiale Bewegung aus.

An einem Wandabschnitt, der die Einführschräge 18 begrenzt, befindet sich im Übergang zur Unterseite des Formschlusskragens 17 eine Abrundung 21 (Fig. 1), die das Herausfahren des Formschlusselements 16 aus der Einführschräge 18 erleichtert.

## Patentansprüche

1. Filtereinrichtung mit einem Filterelement (4) zur Filtration eines flüssigen oder gasförmigen Fluids, wobei das Filterelement (4) einen Filtermediumkörper (5), der einen innenliegenden Strömungsraum (9) umschließt, und mindestens eine Endscheibe (6) aufweist, die bezogen auf eine Längsachse (8) des Filtermediumkörpers (5) an einer Stirnseite desselben angeordnet ist, mit einem Filtergrundgehäuse (2) zur Aufnahme des Filterelements (4) und mit einem Montagebauteil (3) zur Montage und Demontage des Filterelements (4) im Filtergrundgehäuse (2), wobei das Montagebauteil (3) mit der Endscheibe (6) und zusätzlich über eine Drehbewegung um die Längsachse (8) mit dem Filtergrundgehäuse (2) verbindbar ist, **dadurch gekennzeichnet, dass** am Montagebauteil (3) mindestens ein Formschlusselement (16) angeordnet ist, das mit einem Gegenformschlusselement (17), das an der Endscheibe (6) oder an einem Bauteil an der Endscheibe (6) angeordnet ist, in eine axiale Formschlussverbindung bei zugleich in Drehrichtung um die Längsachse (8) freier Rotierbarkeit verbringbar ist, wobei das Gegenformschlusselement (17) als ein umlaufender Formschlusskragen (17) ausgebildet ist, in den mindestens eine kulissenförmige Einführschräge (18) zum Einführen des Formschlusselements (16) am Montagebauteil (3) eingebracht ist.

2. Filtereinrichtung nach Anspruch 1, **dadurch gekennzeichnet, dass** das Montagebauteil einen Deckel (3) des Filtergehäuses bildet, der in Montageposition eine offene Seite des Filtergrundgehäuses (2) abdeckt.

3. Filtereinrichtung nach Anspruch 1 oder 2, **dadurch gekennzeichnet, dass** das Montagebauteil (3) und das Filtergrundgehäuse (2) mit ineinander verschraubbaren Gewinden (14) versehen sind.

4. Filtereinrichtung nach einem der Ansprüche 1 bis 3, **dadurch gekennzeichnet, dass** an der Endscheibe (6) ein axial überstehender Dom (11) angeformt ist, an dem das Gegenformschlusselement als am Dom (11) radial überstehender Formschlusskragen (17) ausgebildet ist.

5. Filtereinrichtung nach Anspruch 4, **dadurch gekennzeichnet, dass** der Dom (11) ein Strömungsbauteil bildet, das mit dem innenliegenden Strömungsraum (9) im Filtermediumkörper strömungsverbunden ist.

6. Filtereinrichtung nach Anspruch 4 oder 5, **dadurch gekennzeichnet, dass** in den Formschlusskragen (17) zwei diametral gegenüberliegende Einführschrägen (18) eingebracht sind.

7. Filtereinrichtung nach einem der Ansprüche 4 bis 6, **dadurch gekennzeichnet, dass** das Montagebauteil (3) einen axial verlaufenden Strömungsstutzen (15) aufweist, der auf den Dom (11) aufsetzbar ist, wobei an der Wand des Strömungsstutzens (15) das mindestens eine Formschlusselement (16) angeordnet ist.

8. Filtereinrichtung nach einem der Ansprüche 1 bis 7, **dadurch gekennzeichnet, dass** die mindestens eine Einführschräge (18) näherungsweise entlang einer Geraden ausgerichtet ist, die mit der Drehbewegung des Montagebauteils (3) einen spitzen Winkel einnimmt.

9. Filtereinrichtung nach einem der Ansprüche 1 bis 8, **dadurch gekennzeichnet, dass** der Übergang eines Wandabschnitts, der die mindestens eine Einführschräge (18) begrenzt, zur Unterseite des Formschlusskragens abgerundet ausgeführt ist.

10. Filtereinrichtung nach einem der Ansprüche 1 bis 9, **dadurch gekennzeichnet, dass** an der Innenwand des Filtergrundgehäuses (2) eine axiale Führungsrippe (19) angeordnet ist, wobei in den Außenrand einer Endscheibe (7) eine korrespondierende Abflachung (20) eingebracht ist.

11. Verwendung eines Filterelements in einer Filtereinrichtung nach einem der Ansprüche 1 bis 10, wobei das Filterelement (4) einen Filtermediumkörper (5), der einen innenliegenden Strömungsraum (9) umschließt, und mindestens eine Endscheibe (6) aufweist, die bezogen auf eine Längsachse (8) des Filtermediumkörpers (5) an einer Stirnseite desselben angeordnet ist, mit einem Gegenformschlusselement (17), das an der Endscheibe (6) oder an einem Bauteil an der Endscheibe (6) angeordnet ist, wobei das Gegenformschlusselement als ein umlaufender Formschlusskragen (17) ausgebildet ist, in den mindestens eine kulissenförmige Einführschräge (18) zum Einführen eines Formschlusselements (16) an einem Montagebauteil (3) eingebracht ist.

12. Filterelement für eine Filtereinrichtung, insbesondere nach einem der Ansprüche 1 bis 10, mit einem Filtermediumkörper (5), der einen innenliegenden Strömungsraum (9) umschließt und mindestens eine Endscheibe (6) aufweist, die bezogen auf eine Längsachse (8) des Filtermediumkörpers (5) an einer Stirnseite desselben angeordnet ist, mit einem Gegenformschlusselement (17), das an der Endplatte (6) oder an einem Bauteil an der Endplatte (6) angeordnet ist, wobei das Gegenformschlusselement (17) als ein radial überstehender, umlaufender Formschlusskragen (17) ausgebildet ist, in den mindestens eine kulissenförmige Einführschräge (18) zum Einführen eines Formschlusselements (16) an einem Montagebauteil (3) eingebracht ist.

## Claims

1. A filter device having a filter element (4) for filtering a liquid or gaseous fluid, wherein the filter element (4) features a filter medium body (5) enclosing an internal flow chamber (9), and at least one end disc (6) disposed, relative to a longitudinal axis (8) of the filter medium body (5), on a front face thereof, having a filter basic housing (2) for receiving the filter element (4) and having a mounting component (3) for mounting and dismounting the filter element (4) in the filter basic housing (2), wherein the mounting component (3) is connectable to the end disc (6) and additionally to the filter basic housing (2) via a rotational motion about the longitudinal axis (8), **characterized in that** at least one form-fit element is disposed on the mounting component (3) and can be brought into an axial form-fit connection with a counter form-fit locking element (17), which is disposed on the end disc (6) or on a component on the end disc (6), while at the same time being freely rotatable in the direction of rotation around the longitudinal axis (8), wherein the counter form-fit locking element (17) is designed as a circumferential form-fit collar (17), into which at least one gate-shaped insertion bevel (18) is provided for inserting the form-fit element (16) on the mounting component (3).

2. The filter device according to claim 1, **characterized in that** the mounting component forms a cover (3) of the filter housing which, in the mounting position, covers an open side of the filter basic housing (2).

3. The filter device according to claim 1 or 2, **characterized in that** the mounting component (3) and the filter basic housing (2) are provided with threads (14) which can be screwed into one another.

4. The filter device according to one of the claims 1 to 3, **characterized in that** on the end disc (6) is integrally molded an axially projecting dome (11) on which the counter form-fit locking element is formed as a form-fit collar (17) projecting radially on the dome (11).

5. The filter device according to claim 4, **characterized in that** the dome (11) forms a flow component which is flow-connected to the internal flow chamber (9) in the filter medium body.

6. The filter device according to claim 4 or 5, **characterized in that** two diametrically opposed insertion bevels (18) are provided in the form-fit collar (17).

7. The filter device according to one of the claims 4 to 6, **characterized in that** the mounting component (3) features an axially extending flow pipe connection (15) which can be placed on the dome (11), wherein the at least one form-fit element (16) is disposed on the wall of the flow pipe connection (15).

8. The filter device according to one of the claims 1 to 7, **characterized in that** the at least one insertion bevel (18) is aligned approximately along a straight line which makes an acute angle with the rotational motion of the mounting component (3).

9. The filter device according to one of the claims 1 to 8, **characterized in that** the transition of a wall section, which delimits the at least one insertion bevel (18), to the lower side of the form-fit collar is rounded.

10. The filter device according to one of the claims 1 to 9, **characterized in that** an axial guiding web (19) is disposed on the inner wall of the filter basic housing (2), wherein a corresponding flattening (20) is introduced into the outer edge of an end disc (7).

11. A use of a filter element in a filter device according to one of the claims 1 to 10, wherein the filter element (4) features a filter medium body (5) enclosing an internal flow chamber (9), and at least one end disc (6), which is disposed, relative to a longitudinal axis (8) of the filter medium body (5), on a front face thereof, having a counter form-fit locking element, which is disposed on the end disc (6) or on a component on the end disc (6), wherein the counter form-fit locking element is designed as a circumferential form-fit collar (17), into which at least one gate-shaped insertion bevel (18) for inserting a form-fit element (16) on a mounting component (3) is provided.

12. A filter element for a filter device, in particular according to one of the claims 1 to 10, having a filter medium body (5) enclosing an internal flow chamber (9) and featuring at least one end disc (6) which is disposed, relative to a longitudinal axis (8) of the filter medium body (5), on a front face thereof, having a counter form-fit locking element (17), which is disposed on the end disc (6) or on a component on the end disc (6), wherein the counter form-fit locking element (17) is designed as a radially projecting, circumferential form-fit collar (17), into which at least one gate-shaped insertion bevel (18) for inserting a form-fit element (16) on a mounting component (3) is introduced.

## Revendications

1. Dispositif de filtration ayant un élément filtrant (4) destiné à filtrer un fluide liquide ou gazeux, dans lequel l'élément filtrant (4) présente un corps de milieu filtrant (5) entourant un espace d'écoulement (9) situé à l'intérieur, et au moins un disque d'extrémité (6) disposé, par rapport à un axe longitudinal (8) du corps de milieu filtrant (5), sur un côté frontal de celui-ci, ayant un boîtier de base de filtre (2) pour recevoir l'élément filtrant (4) et ayant un composant de montage (3) pour monter et démonter l'élément filtrant (4) dans le boîtier de base de filtre (2), dans lequel le composant de montage (3) peut être relié au disque d'extrémité (6) et en plus au boîtier de base de filtre (2) par un mouvement rotatif autour de l'axe longitudinal (8), **caractérisé en ce qu'au** moins un élément à engagement positif est disposé sur le composant de montage (3) et qui peut être amené dans une liaison à engagement positif axiale ayant un contre-élément à engagement positif (17), qui est disposé sur le disque d'extrémité (6) ou sur un composant sur le disque d'extrémité (6), tout en pouvant tourner librement dans le sens de rotation autour de l'axe longitudinal (8), dans lequel le contre-élément à engagement positif (17) est conçu en tant que collerette à engagement positif (17) périphérique, dans laquelle au moins un biseau d'introduction (18) en forme de coulisse est ménagé pour introduire l'élément à engagement positif (16) sur le composant de montage (3).

2. Dispositif de filtration selon la revendication 1, **caractérisé en ce que** le composant de montage forme un couvercle (3) du boîtier de filtre qui, en position de montage, recouvre un côté ouvert du boîtier de base de filtre (2).

3. Dispositif de filtration selon la revendication 1 ou 2, **caractérisé en ce que** le composant de montage (3) et le boîtier de base de filtre (2) sont pourvus de filetages (14) pouvant être vissés l'un dans l'autre.

4. Dispositif de filtration selon l'une quelconque des revendications 1 à 3, **caractérisé en ce qu'**un dôme (11) dépassant axialement est moulé sur le disque d'extrémité (6), le contre-élément à engagement positif étant réalisé sur ledit dôme sous la forme d'une collerette à engagement positif (17) dépassant radialement le dôme (11).

5. Dispositif de filtration selon la revendication 4, **caractérisé en ce que** le dôme (11) forme un composant d'écoulement qui est en liaison d'écoulement avec l'espace d'écoulement (9) situé à l'intérieur dans le corps du milieu filtrant.

6. Dispositif de filtration selon la revendication 4 ou 5, **caractérisé en ce que** deux biseaux d'introduction (18) diamétralement opposés sont ménagés dans la collerette à engagement positif (17).

7. Dispositif de filtration selon l'une quelconque des revendications 4 à 6, **caractérisé en ce que** le composant de montage (3) présente une tubulure d'écoulement (15) s'étendant axialement, qui peut être posée sur le dôme (11), dans lequel l'élément à engagement positif (16), au moins au nombre d'un, est disposé sur la paroi de la tubulure d'écoulement (15).

8. Dispositif de filtration selon l'une quelconque des revendications 1 à 7, **caractérisé en ce que** le biseau d'introduction (18), au moins au nombre d'un, est orienté approximativement le long d'une ligne droite formant un angle aigu avec le mouvement rotatif du composant de montage (3).

9. Dispositif de filtration selon l'une quelconque des revendications 1 à 8, **caractérisé en ce que** le passage d'une section de paroi délimitant le biseau d'introduction (18), au moins au nombre d'un, vers la face inférieure de la collerette à engagement positif est réalisé de manière arrondie.

10. Dispositif de filtration selon l'une quelconque des revendications 1 à 9, **caractérisé en ce qu'**une nervure de guidage axiale (19) est disposée sur la paroi interne du boîtier de base de filtre (2), dans lequel un méplat correspondant (20) est ménagé dans le bord extérieur d'un disque d'extrémité (7).

11. Utilisation d'un élément filtrant dans un dispositif de filtration selon l'une quelconque des revendications 1 à 10, dans laquelle l'élément filtrant (4) présente un corps de milieu filtrant (5) entourant un espace d'écoulement (9) situé à l'intérieur, et au moins un disque d'extrémité (6) disposé, par rapport à un axe longitudinal (8) du corps de milieu filtrant (5), sur une face frontale de celui-ci, ayant un contre-élément à engagement positif disposé sur le disque d'extrémité (6) ou sur un composant sur le disque d'extrémité (6), dans laquelle le contre-élément à engagement positif est conçu en tant que collerette à engagement positif (17) périphérique, dans laquelle au moins un biseau d'introduction (18) en forme de coulisse est ménagé pour introduire un élément à engagement positif (16) sur un composant de montage (3).

12. Elément filtrant pour un dispositif de filtration, notamment selon l'une quelconque des revendications 1 à 10, ayant un corps de milieu filtrant (5) entourant un espace d'écoulement (9) disposé à l'intérieur et présentant au moins un disque d'extrémité (6) disposé, par rapport à un axe longitudinal (8) du corps de milieu filtrant (5), sur une face frontale de celui-ci, ayant un contre-élément à engagement positif (17) disposé sur la plaque d'extrémité (6) ou sur un composant sur la plaque d'extrémité (6), dans lequel le contre-élément à engagement positif (17) est réalisé sous la forme d'une collerette à engagement positif (17) périphérique dépassant radialement, dans laquelle est introduit au moins un biseau d'introduction (18) en forme de coulisse pour introduire un élément à engagement positif (16) sur un composant de montage (3).
